# EUROPEAN PATENT APPLICATION

(11) **EP 4 779 266 A1**
(43) Date of publication of application: **22.07.2026**
(21) Application number: 25152961.6
(22) Date of filing: 20.01.2025
(51) Int. Cl.: G01C 21/34, G01C 21/36

(54) **PROVIDING VEHICLE ROUTE RECOMMENDATIONS INDICATING TRAVELLING TIME IN RELATION TO FUEL CONSUMPTION**

(71) Applicant: Volvo Truck Corporation, 405 08 Göteborg (SE)
(72) Inventor: JOHNSSON, Richard, Göteborg (SE); JOHANNESSON, Wilhelm, Göteborg (SE)
(74) Representative: Ström & Gulliksson AB

(57) **Abstract**

A computer system (100; 400) for providing vehicle route recommendations, the system (100; 400) comprising processing circuitry (102; 402) configured to: receive a destination input request (10) indicating a desired destination (8) for the vehicle (1); determine route suggestions (20) from a current location (6) to the desired destination (8); employ a machine learning model (30) to perform an assessment for each route suggestion (20), each assessment comprising a separation of data into a plurality of transformation process modules (31, 33, 35); and provide route recommendations (40) based on outputs from the machine learning model (30), each route recommendation (40) comprising a cruise controller setting (42) and its expected influence on travelling time of the vehicle (1) in relation to its fuel consumption from the current location (6) to the desired destination (8).

## Description

### TECHNICAL FIELD

The disclosure relates generally to vehicle control. In particular aspects, the disclosure relates to providing vehicle route recommendations indicating travelling time in relation to fuel consumption. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In modern logistics and transportation, vehicle route recommendations assist in operational efficiency and reducing costs. The need for route recommendations is particularly pronounced in the trucking industry, where improving route selection can lead to savings in fuel consumption and improvements in delivery times. Despite the availability of various navigation aids and mapping services, such as Google Maps, existing systems often fall short in addressing the specific needs of truck operators. The currently available routing solutions provide generalized directions that do not account for the unique requirements of vehicles, thus typically offering a one-size-fits-all approach. These approaches fail to consider the intricate details that can affect a certain vehicle's performance on different routes.

### SUMMARY

The approaches discussed herein considers additional vehicle-specific factors, including truck data, road conditions, and cruise controller settings, to enhance route recommendations. Traditional systems often overlook how cruise controller settings impact fuel efficiency and travel time, leaving drivers without important information needed for decision-making. This gap results in suboptimal route choices, leading to unnecessary fuel consumption and longer travel times. The reliance on static data and simulations in current systems further limits their ability to provide dynamic, context-aware recommendations that adapt to real-world conditions and driver preferences.

To address these challenges, the present disclosure introduces a shift towards advanced route recommendation systems that integrate comprehensive truck-specific data with real-time road conditions.

In a first aspect of this disclosure there is accordingly provided a computer system for providing vehicle route recommendations, the system comprising processing circuitry configured to receive a destination input request from a driver of a vehicle, the destination input request indicating a desired destination for the vehicle; determine one or more route suggestions from a current location of the vehicle to the desired destination; employ a machine learning model to perform an assessment for each route suggestion, each assessment comprising a separation of data into a plurality of transformation process modules, wherein a first transformation process module includes map data for said each route suggestion, a second transformation process module includes cruise controller data of a cruise controller functionality associated with the vehicle, a third transformation process module includes truck data of the vehicle, and the machine learning model is configured to process the data of the plurality of transformation process modules through a plurality of neural networks; and provide one or more route recommendations based on outputs from the machine learning model, each route recommendation comprising a cruise controller setting and its expected influence on travelling time of the vehicle in relation to its fuel consumption from the current location to the desired destination.

The first aspect of the disclosure may seek to solve the problem of how to use a cruise controller functionality in a way that is as efficient as possible, balancing fuel and time consumption. A technical benefit may include providing context-aware, route-specific guidance that improves route selection, reduces fuel consumption, and decreases travel times, offering advantages over prior art by adapting to fluctuating conditions and driver preferences.

Optionally in some examples, including in at least one preferred example, the processing circuitry is further configured to input the cruise controller data of the second transformation process module to a first artificial neural network; and merge outputs from the first artificial neural network with the map data included in the first transformation process module. A technical benefit may include enhanced integration of cruise control and map data for more accurate route assessments.

Optionally in some examples, including in at least one preferred example, the processing circuitry is configured to merge the outputs by employing a matrix extension technique. A technical benefit may include improved data representation, allowing for more comprehensive analysis and decision-making.

Optionally in some examples, including in at least one preferred example, the processing circuitry is configured to input the merged outputs to a recurrent neural network. A technical benefit may include better handling of sequential data, improving the model's ability to predict outcomes over time.

Optionally in some examples, including in at least one preferred example, the processing circuitry is further configured to input the truck data of the third transformation process module to a second artificial neural network; and input outputs from the recurrent neural network and outputs from the second artificial neural network to a third artificial neural network. A technical benefit may include enhanced data processing capacity, leading to more accurate and holistic route recommendations.

Optionally in some examples, including in at least one preferred example, the processing circuitry is further configured to apply a ranking algorithm on the outputs from the third artificial neural network. A technical benefit may include prioritizing route suggestions based on efficiency, providing drivers with the best possible options.

Optionally in some examples, including in at least one preferred example, the processing circuitry is configured to provide one or more route recommendations based on outputs from the ranking algorithm. A technical benefit may include delivering tailored route suggestions that balances travel time and fuel efficiency.

Optionally in some examples, including in at least one preferred example, the processing circuitry is further configured to cause presentation of said one or more route recommendations in a graphical user interface of the vehicle. A technical benefit may include easy access to route information, enhancing driver convenience and decision-making.

Optionally in some examples, including in at least one preferred example, the processing circuitry is further configured to receive the destination input request via a graphical user interface of the vehicle. A technical benefit may include streamlined input methods, improving user interaction and system responsiveness.

Optionally in some examples, including in at least one preferred example, the processing circuitry is further configured to cause autonomous driving of the vehicle based on one of said one or more route recommendations. A technical benefit may include increased automation, reducing driver workload and improving safety.

Optionally in some examples, including in at least one preferred example, the processing circuitry is further configured to preprocess the data included in each transformation process module, the preprocessing involving one or more of a transformation, a normalization, and a scaling of the data. A technical benefit may include improved data quality, enhancing the accuracy of the machine learning model's predictions.

In a second aspect of this disclosure there is provided a vehicle comprising the computer system of the first aspect.

The second aspect of the disclosure may seek to solve the problem of how to use a cruise controller functionality in a way that is as efficient as possible, balancing fuel and time consumption. A technical benefit may include providing context-aware, route-specific guidance that improves route selection, reduces fuel consumption, and decreases travel times, offering advantages over prior art by adapting to fluctuating conditions and driver preferences.

In a third aspect of this disclosure there is provided a computer-implemented method for providing vehicle route recommendations, comprising: receiving, by processing circuitry of a computer system, a destination input request from a driver of a vehicle, the destination input request indicating a desired destination for the vehicle; determining, by the processing circuitry, one or more route suggestions from a current location of the vehicle to the desired destination; employing, by the processing circuitry, a machine learning model to perform an assessment for each route suggestion, each assessment comprising a separation of data into a plurality of transformation process modules, wherein a first transformation process module includes map data for said each route suggestion, a second transformation process module includes cruise controller data of a cruise controller functionality associated with the vehicle, a third transformation process module includes truck data of the vehicle, and the machine learning model is configured to process the data of the plurality of transformation process modules through a plurality of neural networks; and providing, by the processing circuitry, one or more route recommendations based on outputs from the machine learning model, each route recommendation comprising a cruise controller setting and its expected influence on travelling time of the vehicle in relation to its fuel consumption from the current location to the desired destination.

The third aspect of the disclosure may seek to solve the problem of how to use a cruise controller functionality in a way that is as efficient as possible, balancing fuel and time consumption. A technical benefit may include providing context-aware, route-specific guidance that improves route selection, reduces fuel consumption, and decreases travel times, offering advantages over prior art by adapting to fluctuating conditions and driver preferences.

In a fourth aspect of this disclosure there is provided a computer program product comprising program code for performing, when executed by the processing circuitry, the computer-implemented method of the third aspect.

The fourth aspect of the disclosure may seek to enable new vehicles and/or legacy vehicles to be conveniently configured, by software installation/update, to solve the problem of how to use a cruise controller functionality in a way that is as efficient as possible, balancing fuel and time consumption. A technical benefit may include providing context-aware, route-specific guidance that improves route selection, reduces fuel consumption, and decreases travel times, offering advantages over prior art by adapting to fluctuating conditions and driver preferences.

In a fifth aspect of this disclosure there is provided a non-transitory computer-readable storage medium comprising instructions, which when executed by the processing circuitry, cause the processing circuitry to perform the computer-implemented method of the third aspect.

The fifth aspect of the disclosure may seek to enable new vehicles and/or legacy vehicles to be conveniently configured, by software installation/update, to solve the problem of how to use a cruise controller functionality in a way that is as efficient as possible, balancing fuel and time consumption. A technical benefit may include providing context-aware, route-specific guidance that improves route selection, reduces fuel consumption, and decreases travel times, offering advantages over prior art by adapting to fluctuating conditions and driver preferences.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle in which some of the inventive aspects of the present disclosure can be applied, according to an example.
**FIG. 2** are exemplary software modules utilized by a computer system for providing vehicle route recommendations, according to an example.
**FIG. 3** is a flowchart of an exemplary method for providing vehicle route recommendations according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure addresses the inefficiencies in current vehicle route recommendation systems by integrating an analysis of vehicle-specific factors, road conditions, and cruise controller settings. This approach employs machine learning techniques to dynamically assess these variables, providing drivers with precise insights into how different driving settings impact fuel efficiency and travel time. By tailoring recommendations to the unique characteristics of each vehicle and adapting to real-time road conditions, the system empowers drivers to make informed decisions that improve route selection, reduce fuel consumption, and decrease travel times.

The teachings herein offer a leap in efficiency by delivering context-aware, route-specific guidance that aligns with the specific needs of trucks and their operational environments. This results in fuel savings, reduced emissions, and enhanced logistical efficiency, contributing to both economic and environmental benefits. The ability to adapt to fluctuating conditions and driver preferences sets it apart from prior art, which often fails to provide reliable and actionable recommendations. Ultimately, this disclosure represents a solution that addresses the limitations of existing systems and offers a more nuanced, effective approach to route optimization.

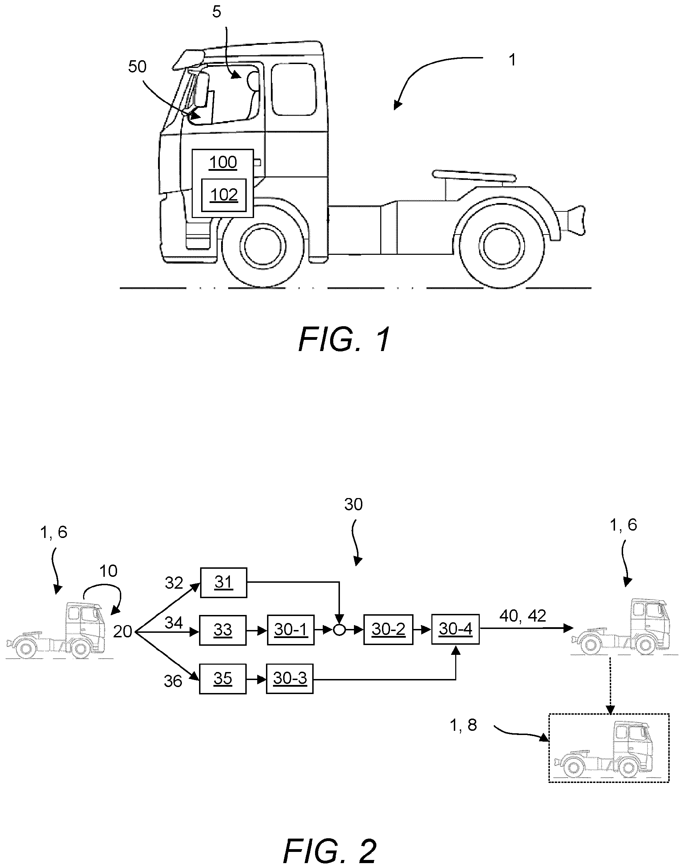

**FIG. 1** is an exemplary illustration of a vehicle **1** in which one or more of the inventive concepts of the present disclosure can be applied. The vehicle **1** may be any suitable vehicle, including but not limited to heavy-duty vehicles, such as trucks, buses, working machines, construction equipment, among other vehicle types. The vehicle **1** may be autonomously controlled, or as depicted in the figure manually controlled by a driver **5.** A combination of manual and autonomous control can also be envisaged.

The vehicle **1** comprises a computer system **100** comprising processing circuitry **102.** In this example the computer system **100** is arranged in the vehicle **1,** but in other examples the computer system **100** may be provided externally to the vehicle **1,** for instance in a cloud-based service implemented using any known cloud technology. The cloud-based service may be configured to communicate with the processing circuitry **102** of the vehicle **1** for purposes of providing vehicle route recommendations. In yet alternative examples, some parts of the computer system **100** is arranged in the vehicle **1** while other parts of the computer system **100** is arranged in the cloud-based service.

The computer system **100** provides vehicle route recommendations. Vehicle route recommendation involves the process of analyzing various data inputs to suggest one or more improved paths the vehicle **1** to travel from a starting point to a desired destination. The route recommendations are designed to optimize the use of the vehicle's **1** cruise controller functionality for specific routes, ensuring that the cruise controller is tailored to the unique demands of each route, enhancing both fuel efficiency and travel performance.

In contexts herein, this "starting point" refers to a current location of the vehicle **1** at the moment when a route calculation is initiated, triggered by the reception of a destination input request from the driver **5.** The current location may be determined by positioning data providing geographical coordinates representing the real-time position of the vehicle **1.** The positioning data may be obtained by the processing circuitry **102** via a GPS/GNSS receiver, or the like, arranged in the vehicle **1.** The current location thereby serves as the baseline from which the route calculations and recommendations are made. For example, if the vehicle **1** is located at a distribution center in one city, the computer system **102** uses this as the starting point to generate potential routes to the next destination.

The "desired destination", on the other hand, is the endpoint or target location. This may be inputted by the driver **5,** for example via the graphical interface **50,** or preprogrammed into the computer system **102** based on delivery schedules or logistical requirements. The processing circuitry **102** may obtain data pertaining to such schedules or requirements via an external service, such as a fleet manager service. The desired destination can be a specific address, a geographic coordinate, or a general area such as a city or region. The role of the computer system **100** is to analyze various route options from the starting point to this desired destination, taking into account data involving map data, cruise controller data, and truck data. This data is used to recommend the most efficient and effective path from the current location to the desired destination. If the desired destination is, for example, a warehouse located in another city, the computer system **100** will assess all possible routes to this location, recommending the one that best balances travelling time in relation to fuel consumption of the vehicle **1** for a certain cruise controller setting.

It shall be understood that a "suggested route" as discussed herein is distinct from a "recommended route". The suggested route typically refers to a basic path option, for example provided by systems like Google Maps, which are primarily based on factors such as distance, estimated travel time, and current traffic conditions. These suggestions aim to guide the user from a current location to a desired destination, often offering several alternatives based on straightforward criteria like avoiding tolls or highways.

In contrast, a "recommended route" as described in this disclosure goes beyond these basic suggestions by incorporating a sophisticated analysis of each route suggestion. This analysis includes a detailed consideration of cruise controller data of a cruise controller functionality associated with the vehicle **1,** and evaluates how this data is expected to influence both travelling time and fuel consumption. The computer system **100** does this by employing a machine learning model that performs an assessment for each route suggestion. Based on outputs from the machine learning model, the potential time savings or losses in minutes is compared with potential fuel savings achievable with different cruise control settings.

The concept of "travelling time in relation to fuel consumption" for a cruise controller setting accordingly refers to the trade-offs between how quickly a route can be completed and how efficiently fuel is used, when the vehicle **1** employs that specific cruise controller setting. This relationship aims to balance operational costs and environmental impact. For instance, a route that is slightly longer but allows for more efficient use of cruise control settings may result in fuel savings, which can be desirable for reducing costs and emissions. By providing recommendations that highlight this balance, the computer system **100** empowers drivers to make informed decisions that align with their strategic objectives, whether they prioritize speed, cost savings, or sustainability. This approach ensures that the vehicle **1** operates at a desirable efficiency for the chosen route, offering enhanced fuel efficiency and a more informed basis for decision-making compared to traditional route suggestions.

Since the machine learning model performs calculations, the cruise controller setting will be associated with an "expected" influence on travelling time and fuel consumption, meaning that route recommendations will involve a prediction on how different configurations of the cruise controller will impact the overall efficiency of the journey. This prediction involves estimating the potential reduction or increase in travel time, for example in minutes, alongside the fuel savings, for example in percentages, or additional consumption that might occur under varying settings.

In some examples, a route recommendation may include a plurality of cruise controller settings, each setting indicating an expected influence on travelling time of the vehicle 1 in relation to its fuel consumption. By way of example, when the computer system **100** presents a recommended route, it might list several cruise control options such as "Eco", "Balanced", and "Performance", each associated with specific impacts on travel metrics. For the "Eco" setting, the computer system **100** might indicate an expected increase in travel time by 10 minutes compared to the fastest route but highlight a fuel consumption reduction of 20%. This setting could be desirable for drivers prioritizing fuel efficiency and cost savings over speed. The "Balanced" setting might suggest a travel time increase of only 5 minutes with a moderate fuel savings of 12%, catering to drivers seeking a compromise between efficiency and time. Lastly, the "Performance" setting could offer no additional travel time compared to the fastest option, but with minimal fuel savings, such as 5%, suitable for scenarios where time is critical.

In some examples, a route recommendation may involve a segmentation of the total journey to be travelled, from the current location to the desired destination, into distinct geographical segments. Each segment is assigned a specific cruise controller setting selected for the map data associated with that particular segment. This approach may allow for a more refined strategy that enhances fuel efficiency and travel performance across the entire route.

By way of example, consider a route that begins with an initial 5-kilometer stretch of predominantly uphill driving. The computer system **100** may recommend a cruise controller setting selected for uphill conditions, such as an "Uphill Efficiency" mode. This setting could be designed to maintain a steady speed while reducing fuel consumption by adjusting power delivery and engine performance to suit the incline. As the vehicle **1** progresses to the next 5 kilometers, which is largely downhill, the computer system **100** might switch to a "Downhill Conservation" mode. This setting would focus on utilizing the use of gravitational force, potentially employing engine braking and reducing throttle input to conserve fuel while maintaining control and safety. Further along the route, the terrain might level out, warranting a transition to a "Balanced" mode that considers both speed and fuel efficiency on flat terrain. By dynamically adjusting the cruise control settings to align with the specific requirements of each segment, the computer system **100** ensures that the vehicle **1** operates at peak efficiency throughout the journey.

The route recommendations may be provided in the form of instructions for the driver **5** to manually execute, and/or in the form of control signals for autonomous selection and subsequent control of the vehicle **1** according to said instructions.

In the manual example, the route recommendations are typically conveyed via a graphical user interface, GUI, **50** included in the vehicle **1.** The primary purpose of this GUI **50** is to clearly present information relating to the route recommendations, enabling the driver **5** to make informed choices regarding their travel. The GUI **50** can be part of the vehicle's **1** infotainment system or a standalone device specifically designed for navigation purposes. In the GUI **50,** metrics such as estimated travel time and potential fuel savings associated with different cruise controller settings can be displayed. These metrics are preferably displayed in an easy-to-read format, possibly with graphical elements such as bar charts or icons to visually represent the differences in time and fuel efficiency.

By way of example, the GUI **50** might show two different recommended routes, route A and route B, from the current location to the desired destination. Route A could have an estimated travel time of 90 minutes with a potential fuel savings of 15% if the cruise controller is set to an "Eco" mode. Conversely, Route B might display an estimated travel time of 80 minutes but with a lower potential fuel savings of 8% when using a "Standard" cruise control setting. Of course, the GUI **50** might show more than two possible routes as well.

The example of the segmented approach can also be displayed on the GUI **50,** providing the driver **5** with clear instructions on when and how the cruise controller settings will change. This strategy thus not only seek to increase fuel savings and emissions but also enhance the overall driving experience by adapting to the varying demands of the route. By tailoring the cruise control strategy to different geographical segments, the driver **5** may directly see the benefit from a more efficient and responsive system across diverse driving conditions.

In addition to the GUI **50,** other forms of user interfaces can be employed to convey route recommendations. For example, audio interfaces can provide verbal guidance and updates, allowing the driver **5** to remain focused on the road while receiving information. The computer system **100** can also support voice recognition capabilities, enabling the driver **5** to respond and make selections through speech commands. Other potential interfaces include haptic feedback systems, which could provide physical cues, such as vibrations, to alert the driver **5** to important information or changes in route recommendations.

**FIG. 2** show exemplary software modules utilized by the computer system **100** for providing vehicle route recommendations. The modules depicted follow a specific flow of operation, where the arrows indicate data being outputted from the modules and inputted into subsequent modules. In combination, these modules aim to provide one or more route recommendations **40** for the vehicle **1.** The functionality of the modules are implemented by the processing circuitry **102** of the computer system **100.** The process beings from the left side of the illustration where the vehicle **1** is located at a starting point being the current location **6.**

Initially, a destination input request **10** is received from the driver **5** of the vehicle **1.** This request **10** indicates a desired destination **8** for the vehicle **1.** The destination input request **10** can be defined as a data input that indicates the endpoint the driver **5** wishes to reach. It is received by the processing circuitry **102** of the computer system **100.** The destination input request **10** can be submitted at any time, either before the trip begins or during the journey, allowing for flexibility in planning and optionally route adjustments. The driver **5** can provide the destination input request **10** using various means, such as a touchscreen interface within the vehicle's infotainment system, for example at the GUI **50,** voice commands, or even through a connected mobile application. By facilitating this input process, the computer system **100** allows the driver **5** to dynamically update and refine route planning.

Based on the destination input request **10,** one or more route suggestions **20** are determined, for example using basic routing algorithms typical of conventional navigation systems. These suggestions are generated by analyzing the current location **6** of the vehicle **1** and the desired destination **8,** considering factors such as distance, estimated travel time, possible connecting drivable roads, and real-time traffic conditions. The processing circuitry **102** may access a database of map data to calculate possible routes from the current location **6** to the desired destination **8,** and evaluate these routes based on criteria like shortest distance, fastest time, or avoidance of toll roads and highways. Real-time data feeds may update the suggestions to account for traffic congestion or road closures, ensuring that the driver **5** receives the most relevant and timely suggestions. These initial route suggestions **20** serve as the foundation for the subsequent calculations that will be performed, setting the stage for more advanced analyses.

Once the route suggestions **20** are determined, a machine learning model **30** is employed to conduct a detailed assessment of each suggestion **20.** This assessment involves separating the data into a plurality of transformation process modules **31, 33, 35.** Each module **31, 33, 35** is designed to handle specific types of data relevant to optimizing the route recommendations. A transformation process module **31, 33, 35** is a component within the computer system **100** that processes specific data inputs, transforming them into a format suitable for analysis by the machine learning model **30.** The process of "separation" involves categorizing and compartmentalizing different data types to ensure that each data type is assessed independently, using specialized algorithms to derive insights before integrating the results into a comprehensive assessment of each route suggestion **20.** This approach ensures that all relevant variables are considered, leading to more accurate and effective route recommendations. In this case, the data is separated into three key modules.

The first module **31** includes map data **32** for the route suggestion **20.** The map data **32** encompasses various types of information that directly impact the driving experience and route efficiency. Specifically, the map data **32** may include topography data, curvature data, and speed limit data. By integrating these elements, the map data **32** provides a comprehensive view of the physical and regulatory characteristics of each route. This allows the machine learning model **30** to evaluate how these factors interact with the vehicle's **1** capabilities, ultimately enhancing the accuracy and reliability of the route recommendations.

The map data **34** for each route suggestion **20** may be structured in a matrix format, where each row corresponds to a specific distance unit, for instance meter, of the road. This organization allows for detailed analysis of the route's characteristics. The columns in this matrix represent the different data (topography data, curvature data, and speed limit data). By using a vector format with resolution based on distance intervals, this matrix allows the computer system **100** to analyze and process the route data efficiently. Each feature is precisely mapped to a specific point along the route.

Topography data provides insights into the elevation changes and gradients along a route. This information used for understanding how inclines and declines can affect the vehicle's **1** fuel consumption and travel time. For example, a route with significant uphill segments might require different cruise control settings to maintain efficiency compared to a flat route. Curvature data details the bends and turns in the road. This data helps in determining how the vehicle **1** should navigate curves, which can influence speed adjustments and maneuvering strategies. Routes with sharp curves may necessitate reduced speeds and can impact the overall travel time and fuel efficiency. Speed limit data captures the legal speed restrictions along various segments of the route. This information ensures that the route recommendations comply with traffic regulations and helps predict travel time more accurately. Adhering to speed limits is not only a legal necessity but also an important factor in fuel consumption calculations.

The second module **33** includes cruise controller data **34** of a cruise controller functionality associated with the vehicle **1.** The cruise controller data **34** provides detailed information about the vehicle's **1** cruise control functionality, including parameters that influence how the vehicle **1** manages speed and efficiency along a route, such as braking speed data, minimum hill speed data, maximum rolling speed data, drive mode data, under speed data, and over speed data. The cruise controller functionality, in this context, manages these parameters autonomously, adjusting the vehicle's **1** speed and performance to align with the specific characteristics of the route. By analyzing these data points, the machine learning model **30** can determine the desirable cruise control settings for the journey as a whole, and optionally for each segment of the journey, enhancing both fuel efficiency and travel time.

Braking speed data refers to the ability of the cruise controller functionality to manage deceleration, ensuring smooth and efficient braking, especially on downhill segments. This helps maintain control and conserve fuel. Minimum hill speed data specifies the lowest speed the vehicle **1** can maintain while climbing an incline without losing efficiency. This is used for assessing fuel consumption on uphill sections. Maximum rolling speed data indicates the highest speed the vehicle **1** can safely maintain while coasting, particularly on flat or downhill paths, to improve fuel efficiency. Drive mode data encompasses the various operational modes of the cruise control system, such as "Eco", "Standard", or "Performance", each tailored to different driving conditions and efficiency goals. Under speed data defines the threshold below which the cruise control will attempt to increase speed to maintain a set pace, ensuring consistent travel speed and preventing unnecessary slowdowns. Over speed data sets the limit beyond which the cruise control will reduce speed to avoid exceeding safe or efficient operational limits.

The third module **35** includes truck data **36** of the vehicle **1.** The truck data **36** incorporates specific characteristics and capabilities of the vehicle **1** that influence how the vehicle **1** performs under various driving conditions, including e.g., mass data, transmission type data, engine type data, and propulsion source data. By integrating this truck data **36,** the machine learning model **30** can make informed decisions about route selection, taking into account the vehicle's **1** unique attributes and ensuring that the recommended routes are not only efficient but also compatible with the vehicle's **1** operational capabilities, leading to better performance and reduced fuel consumption.

The mass data refers to the total weight of the vehicle **1,** including cargo. This information is important for calculating fuel consumption and determining how the vehicle **1** will handle different terrains, such as inclines and declines. The transmission type data indicates whether the vehicle **1** uses a manual, automatic, or semi-automatic transmission. This affects how the cruise control system manages gear changes and engine performance, impacting both efficiency and driving smoothness. Engine type data provides details about the vehicle's **1** engine, such as whether it is diesel, gasoline, or an alternative fuel engine. This data helps in improving fuel efficiency and performance based on the engine's specific characteristics and limitations. Propulsion source data identifies the method of propulsion used by the vehicle **1,** such as electric, hybrid, or internal combustion. Understanding the propulsion source allows the computer system **100** to make more accurate predictions about energy consumption and efficiency.

Before calculations start, the processing circuitry **102** may preprocess the data **32, 34, 36** in each module **31, 33, 35** to prepare it for analysis. This involves transformation, which changes the data format for compatibility; normalization, which adjusts values to a common scale to ensure consistency; and scaling, which resizes data to fit within a specific range for efficient processing.

The machine learning model **30** then processes this data **32, 34, 36** through a plurality of neural networks **30-1, 30-2, 30-3, 30-4.**

The cruise controller data **34** is inputted to a first artificial neural network **30-1,** preferably being a fully connected layer. This layer aims to enhance the representation of the cruise controller data **34** by capturing complex relationships and patterns within the cruise controller settings. In this context, the fully connected layer is a type of artificial neural network where each neuron in one layer is connected to every neuron in the next layer. This setup allows the network to learn intricate patterns and dependencies in the cruise controller data **34,** making it possible to generate a detailed and nuanced representation of the cruise controller settings. The implementation of this network involves several layers of interconnected nodes or neurons, utilizing known methods such as backpropagation and gradient descent to train the first artificial neural network **30-1.** The network processes inputs by applying weights and biases, learning to adjust these parameters during training to improve prediction accuracy. Although using fully connected layers in neural networks is, as such, a known method in machine learning, applying it to cruise controller data **34** in this specific context enables computer system **100** to extract more refined insights, enhancing the accuracy and effectiveness of the route recommendations by considering complex interactions within the cruise controller settings.

Exemplary artificial neural network techniques that can be employed include convolutional neural networks, deep belief networks, and feedforward neural networks.

After processing the cruise controller data **34** through the first artificial neural network **30-1,** the outputs are merged with the map data **32** from the first transformation process module **31,** for example using a matrix extension technique. This approach combines the detailed representation of cruise controller settings with the existing road information, creating a comprehensive dataset for further analysis.

The matrix extension technique involves appending new columns to the initial map data matrix, such as the one discussed above relating to the map data **32.** These columns represent the exemplary data types of the cruise controller data **34.** By doing so, multiple matrices are created, each reflecting different configurations of cruise control settings for the same route. The resulting matrix will thus include both map data **32** and cruise controller data **34,** providing a holistic view of the route. It allows the system to further assess how different cruise control configurations interact with features of the road, ultimately enabling more accurate and effective route recommendations.

After merging the outputs from the first artificial neural network **30-1** with the map data **32,** the resulting matrix is inputted into a recurrent neural network **30-2.** This step leverages the sequential or "temporal" dependency evident in the data. Temporal dependency refers to the sequential nature of the route information, where each segment of the road influences the next, creating a chain of interconnected data points. To effectively extract features from this temporal data, the recurrent neural network **30-2** is utilized, preferably being an LSTM (Long Short-Term Memory) model. LSTM models are specifically designed to handle sequences of varying lengths, making them advantageous for processing route data, which can differ in size depending on the journey. Other examples may include gated recurrent units or bi-directional recurrent neural networks.

The recurrent neural network **30-2** processes the sequential data by maintaining a memory of previous inputs, allowing it to understand the context and relationships between consecutive sections of the route. This capability enables the model to capture temporal patterns and dependencies, which are important for predicting how the vehicle will perform over the entire journey. By analyzing this sequential data, the recurrent neural network **30-2** provides insights into the dynamic interactions between road conditions and cruise control settings throughout the route. This analysis helps refine the overall route recommendations, ensuring they are both efficient and tailored to the specific characteristics of the journey.

Before integrating the truck data **36** with the merged map and cruise controller data **32, 34,** it is processed through a second artificial neural network **30-3.** This is done due to the fact that the truck data **36,** originating from the third module **35,** is static and does not exhibit temporal dependency like the data from the first and second modules **31, 33.** The second artificial neural network **30-3,** typically also configured as a fully connected layer, processes this static data to capture intricate relationships and interactions. By doing so, the raw truck data **36** is transformed into a more comprehensive representation.

Once processed, the outputs from the second artificial neural network **30-3** are combined with the results from the recurrent neural network **30-2,** which has already analyzed the temporal aspects of the map and cruise controller data. The merging of static and temporal insights allows for a holistic evaluation of the route, considering both the dynamic conditions of the journey and the inherent characteristics of the vehicle. This involves inputting the outputs from both the recurrent neural network **30-2** and the second artificial neural network **30-3** into a third artificial neural network **30-4.** This third artificial neural network **30-4** acts as an integrative layer, combining the temporal insights from the recurrent neural network **30-2** with the static characteristics processed by the second artificial neural network **30-3.** The third artificial neural network **30-4,** preferably incorporating a fully connected layer, synthesizes these diverse data streams to generate comprehensive estimates of fuel consumption and travel time for the route under various cruise control settings. This combined analysis allows the computer system **100** to deliver precise and actionable recommendations tailored to both the journey's dynamic conditions and the vehicle's **1** specific attributes.

In a final computation step, a ranking algorithm may be employed to evaluate and prioritize the results obtained as outputs from the third artificial neural network **30-4.** This algorithm organizes various route recommendations **40,** each comprising one or more cruise controller settings **42,** based on their projected efficiency and effectiveness. The ranking algorithm may consider metrics including expected influence on travelling time of the vehicle **1** in relation to its fuel consumption from the location of origin (starting point) to the destination. By comparing these factors, the system ranks the routes to identify, typically in descending order of relevance, options to choose from.

The following shows an example of how a ranking algorithm can operate on the route recommendations **40.** Suppose the system generates three route recommendations **40,** each with different cruise controller settings **42.** A "route A" includes an estimated travel time of 90 minutes with fuel consumption projected at 15 liters using an "Eco" cruise control setting. A "route B" includes an estimated travel time of 85 minutes with fuel consumption projected at 18 liters using a "Balanced" setting. A "route C" includes an estimated travel time of 80 minutes with fuel consumption projected at 20 liters using a "Performance" setting. The ranking algorithm evaluates these recommendations based on predefined criteria, with the goal of reducing fuel consumption and/or travel time. If the priority is fuel efficiency, route A would rank highest due to its lower fuel use. Conversely, if the objective is the shortest travel time, route C might be preferred despite higher fuel consumption. The ranking algorithm may dynamically weigh these factors, producing a ranked list of options that reflect the driver's **5** operational goals, whether it's conserving fuel, reducing emissions, or reducing travel time. As stated above, this can optionally be autonomously implemented for control of the vehicle **1** without driver **5** interference.

In view of the above, the ranking algorithm can compare travel times associated with several settings **42,** for instance between a chosen setting and one or more alternative settings. This comparison allows the computer system **100** to evaluate how different cruise control configurations impact overall travel efficiency. For instance, each route recommendation **40** may present travel time estimates for multiple configurations: the primary setting **42** and alternative settings **42.** The ranking algorithm analyzes these estimates to identify which configuration offers the most efficient balance between speed and fuel consumption.

In some examples, each route recommendation **40** may include a simulation of the cruise controller settings **42** from the current location **6** to the desired destination **8.** Here, a "simulation" refers to a virtual modeling process where the computer system **100** predicts how different cruise control settings will perform along the entire route under various conditions. Unlike previous discussions, this simulation provides a comprehensive, hypothetical run-through of the journey, considering every segment of the route, thus relating to the segmentation example discussed above. The simulation models the journey under various conditions, predicting how each cruise controller setting impacts travel time and fuel efficiency, and overall performance. This process allows the system to anticipate challenges and adjust recommendations accordingly.

The machine learning model **30** and its components have been thoroughly detailed above. In addition, the validation and training processes of the model **30** will now be explained according to various examples.

A validation of the machine learning model **30** describes herein involves two distinct strategies. The first validation strategy involves comparing the predictions of the machine learning model **30** with actual real-world data logged from vehicles. This involves checking the accuracy of the outputs of the machine learning model **30** by ensuring they align closely with recorded data from real driving scenarios. While it is acknowledged that some variations will naturally occur due to environmental and situational differences, the machine learning model **30** is expected to consistently produce results that are reasonably accurate and reflective of real-world conditions.

The second validation strategy employs a baseline model to assess the outputs of the machine learning model **30.** The baseline model calculates potential fuel savings based on average fuel consumption and general road information, without considering specific cruise control settings. By comparing the predictions of the machine learning model **30** against this baseline, it is possible to determine whether the machine learning model **30** provides enhanced accuracy and insights that surpass those of a more simplistic approach. This comparison ensures that the machine learning model **30** adds value by incorporating detailed cruise control optimizations, rather than merely replicating basic predictions.

The training strategy for the machine learning model **30** involves using gradient descent optimization through backpropagation, focusing on matching input and output data. This process helps the machine learning model **30** learn by iteratively adjusting the weights to minimize prediction errors. Various techniques enhance this training process, including regularization to prevent overfitting, dropout to improve generalization, and varying learning rates to optimize convergence speed. These methods are selected and refined as the training progresses.

Initially, the machine learning model **30** is trained on a smaller dataset, allowing for the development and testing of the different machine learning modules, such as the various neural networks **30-1, 30-2, 30-3, 30-4** discussed herein. Once the initial model structure is validated and effective, the dataset is expanded to include more data, increasing the robustness and accuracy of the machine learning model **30.**

High-fidelity models of the cruise controller are used in this training process. These models provide detailed, realistic simulations of cruise controller behavior, allowing the machine learning model **30** to learn from accurate representations of how cruise control settings impact vehicle performance. By incorporating these high-fidelity models, the training process ensures that the machine learning model **30** not only predicts outcomes based on historical data but also anticipates how optimized cruise control settings can enhance efficiency and performance across different routes.

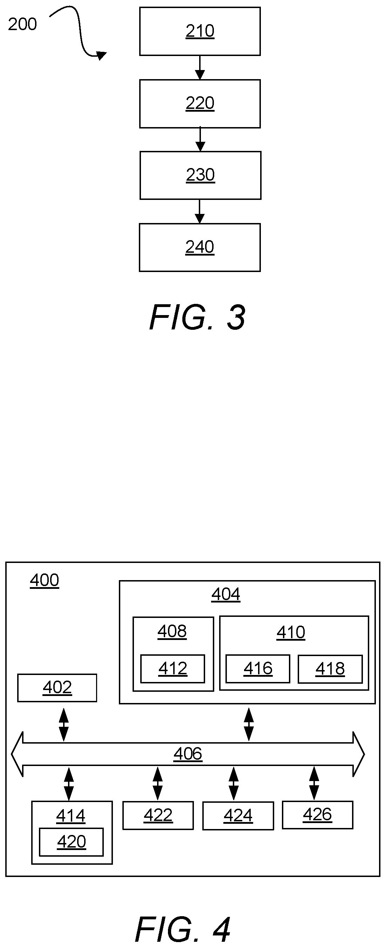

**FIG. 3** shows an exemplary flowchart diagram of a computer-implemented method **200** for providing vehicle route recommendations. The method **200** is implemented by processing circuitry of a computer system. At **210,** the method **200** involves receiving a destination input request from a driver of a vehicle. The destination input request indicates a desired destination for the vehicle. At **220,** the method **200** involves determining one or more route suggestions from a current location of the vehicle to the desired destination. At **230,** the method **200** involves employing a machine learning model. The machine learning model performs an assessment for each route suggestion, each assessment comprising a separation of data into a plurality of transformation process modules. A first transformation process module includes map data for each route suggestion, a second transformation process module includes cruise controller data of a cruise controller functionality associated with the vehicle, and a third transformation process module includes truck data of the vehicle. The machine learning model is configured to process the data of the plurality of transformation process modules through a plurality of neural network. At **240,** the method **200** involves providing one or more route recommendations based on outputs from the machine learning model. Each route recommendation comprises a cruise controller setting and its expected influence on travelling time of the vehicle in relation to its fuel consumption from the current location to the desired destination.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In further examples of this disclosure the following are provided.

Example 1: A computer system (100) for providing vehicle route recommendations, the system (100) comprising processing circuitry (102) configured to receive a destination input request (10) from a driver (5) of a vehicle (1), the destination input request (10) indicating a desired destination (8) for the vehicle (1); determine one or more route suggestions (20) from a current location (6) of the vehicle (1) to the desired destination (8); employ a machine learning model (30) to perform an assessment for each route suggestion (20), each assessment comprising a separation of data into a plurality of transformation process modules (31, 33, 35), wherein a first transformation process module (31) includes map data (32) for said each route suggestion (20), a second transformation process module (33) includes cruise controller data (34) of a cruise controller functionality associated with the vehicle (1), a third transformation process module (35) includes truck data (36) of the vehicle (1), and the machine learning model (30) is configured to process the data (32, 34, 36) of the plurality of transformation process modules (31, 33, 36) through a plurality of neural networks (30-1, 30-2, 30-3, 30-4); and provide one or more route recommendations (40) based on outputs from the machine learning model (30), each route recommendation (40) comprising a cruise controller setting (42) and its expected influence on travelling time of the vehicle (1) in relation to its fuel consumption from the current location (6) to the desired destination (8).

Example 2: The computer system (100) of Example 1, wherein the processing circuitry (102) is further configured to input the cruise controller data (34) of the second transformation process module (33) to a first artificial neural network (30-1); and merge outputs from the first artificial neural network (30-1) with the map data (32) included in the first transformation process module (31).

Example 3: The computer system (100) of Example 2, wherein the processing circuitry (102) is configured to merge the outputs by employing a matrix extension technique.

Example 4: The computer system (100) of any of Examples 2-3, wherein the processing circuitry (102) is configured to input the merged outputs to a recurrent neural network (30-2).

Example 5: The computer system (100) of Example 4, wherein the processing circuitry (102) is further configured to input the truck data (36) of the third transformation process module (35) to a second artificial neural network (30-3); and input outputs from the recurrent neural network (30-2) and outputs from the second artificial neural network (30-3) to a third artificial neural network (30-4).

Example 6: The computer system (100) of Example 5, wherein the processing circuitry (102) is further configured to apply a ranking algorithm on the outputs from the third artificial neural network (30-4).

Example 7: The computer system (100) of any of Examples 5-6, wherein the processing circuitry (102) is configured to provide one or more route recommendations (40) based on outputs from the ranking algorithm.

Example 8: The computer system (100) of any preceding Example, wherein the processing circuitry (102) is further configured to cause presentation of said one or more route recommendations (40) in a graphical user interface (50) of the vehicle (1).

Example 9: The computer system (100) of any preceding Example, wherein the processing circuitry (102) is further configured to receive the destination input request (10) via a graphical user interface (50) of the vehicle (1).

Example 10: The computer system (100) of any preceding Example, wherein the processing circuitry (102) is further configured to cause autonomous driving of the vehicle (1) based on one of said one or more route recommendations (40).

Example 11: The computer system (100) of any preceding Example, wherein the processing circuitry (102) is further configured to preprocess the data (32, 34, 36) included in each transformation process module (31, 33, 35), the preprocessing involving one or more of a transformation, a normalization, and a scaling of the data (32, 34, 36).

Example 12: The computer system (100) of any preceding Example, wherein the map data (32) comprises topography data, curvature data, and speed limit data.

Example 13: The computer system (100) of any preceding Example, wherein the cruise controller data (34) comprises braking speed data, minimum hill speed data, maximum rolling speed data, drive mode data, under speed data, and over speed data.

Example 14: The computer system (100) of any preceding Example, wherein the truck data (36) comprises mass data, transmission type data, engine type data, and propulsion source data.

Example 15: The computer system (100) of any preceding Example, wherein each route recommendation (40) comprises a comparison of traveling times between the cruise controller setting (42) and one or more alternative cruise controller settings (42-a).

Example 16: The computer system (100) of any preceding Example, wherein each route recommendation (40) comprises a simulation of the cruise controller settings (42) from the current location (6) to the desired destination (8).

Example 17: A vehicle (1) comprising the computer system (100) of any preceding Example.

Example 18: A computer-implemented method (200) for providing vehicle route recommendations, comprising receiving (210), by processing circuitry (102) of a computer system (100), a destination input request (10) from a driver (5) of a vehicle (1), the destination input request (10) indicating a desired destination (8) for the vehicle (1); determining (220), by the processing circuitry (102), one or more route suggestions (20) from a current location (6) of the vehicle (1) to the desired destination (8); employing (230), by the processing circuitry (102), a machine learning model (30) to perform an assessment for each route suggestion (20), each assessment comprising a separation of data into a plurality of transformation process modules (31, 33, 35), wherein a first transformation process module (31) includes map data (32) for said each route suggestion (20), a second transformation process module (33) includes cruise controller data (34) of a cruise controller functionality associated with the vehicle (1), a third transformation process module (35) includes truck data (36) of the vehicle (1), and the machine learning model (30) is configured to process the data (32, 34, 36) of the plurality of transformation process modules (31, 33, 36) through a plurality of neural networks (30-1, 30-2, 30-3, 30-4); and providing (240), by the processing circuitry (102), one or more route recommendations (40) based on outputs from the machine learning model (30), each route recommendation (40) comprising a cruise controller setting (42) and its expected influence on travelling time of the vehicle (1) in relation to its fuel consumption from the current location (6) to the desired destination (8).

Example 19: A computer program product comprising program code for performing, when executed by the processing circuitry (102), the method (200) of Example 18.

Example 20: A non-transitory computer-readable storage medium comprising instructions, which when executed by the processing circuitry (102), cause the processing circuitry (102) to perform the method (200) of Example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 400) for providing vehicle route recommendations, the system (100; 400) comprising processing circuitry (102; 402) configured to:
receive a destination input request (10) from a driver (5) of a vehicle (1), the destination input request (10) indicating a desired destination (8) for the vehicle (1);
determine one or more route suggestions (20) from a current location (6) of the vehicle (1) to the desired destination (8);
employ a machine learning model (30) to perform an assessment for each route suggestion (20), each assessment comprising a separation of data into a plurality of transformation process modules (31, 33, 35), wherein:
- a first transformation process module (31) includes map data (32) for said each route suggestion (20),
- a second transformation process module (33) includes cruise controller data (34) of a cruise controller functionality associated with the vehicle (1),
- a third transformation process module (35) includes truck data (36) of the vehicle (1), and
- the machine learning model (30) is configured to process the data (32, 34, 36) of the plurality of transformation process modules (31, 33, 36) through a plurality of neural networks (30-1, 30-2, 30-3, 30-4); and
provide one or more route recommendations (40) based on outputs from the machine learning model (30), each route recommendation (40) comprising a cruise controller setting (42) and its expected influence on travelling time of the vehicle (1) in relation to its fuel consumption from the current location (6) to the desired destination (8).

2. The computer system (100; 400) of claim 1, wherein the processing circuitry (102; 402) is further configured to:
input the cruise controller data (34) of the second transformation process module (33) to a first artificial neural network (30-1); and
merge outputs from the first artificial neural network (30-1) with the map data (32) included in the first transformation process module (31).

3. The computer system (100; 400) of claim 2, wherein the processing circuitry (102; 402) is configured to merge the outputs by employing a matrix extension technique.

4. The computer system (100; 400) of any of claims 2-3, wherein the processing circuitry (102; 402) is configured to input the merged outputs to a recurrent neural network (30-2).

5. The computer system (100; 400) of claim 4, wherein the processing circuitry (102; 402) is further configured to:
input the truck data (36) of the third transformation process module (35) to a second artificial neural network (30-3); and
input outputs from the recurrent neural network (30-2) and outputs from the second artificial neural network (30-3) to a third artificial neural network (30-4).

6. The computer system (100; 400) of claim 5, wherein the processing circuitry (102; 402) is further configured to apply a ranking algorithm on the outputs from the third artificial neural network (30-4).

7. The computer system (100; 400) of any of claims 5-6, wherein the processing circuitry (102; 402) is configured to provide one or more route recommendations (40) based on outputs from the ranking algorithm.

8. The computer system (100; 400) of any preceding claim, wherein the processing circuitry (102; 402) is further configured to cause presentation of said one or more route recommendations (40) in a graphical user interface (50) of the vehicle (1).

9. The computer system (100; 400) of any preceding claim, wherein the processing circuitry (102; 402) is further configured to receive the destination input request (10) via a graphical user interface (50) of the vehicle (1).

10. The computer system (100; 400) of any preceding claim, wherein the processing circuitry (102; 402) is further configured to cause autonomous driving of the vehicle (1) based on one of said one or more route recommendations (40).

11. The computer system (100; 400) of any preceding claim, wherein the processing circuitry (102; 402) is further configured to preprocess the data (32, 34, 36) included in each transformation process module (31, 33, 35), the preprocessing involving one or more of a transformation, a normalization, and a scaling of the data (32, 34, 36).

12. A vehicle (1) comprising the computer system (100; 400) of any preceding claim.

13. A computer-implemented method (200) for providing vehicle route recommendations, comprising:
receiving (210), by processing circuitry (102; 402) of a computer system (100; 400), a destination input request (10) from a driver (5) of a vehicle (1), the destination input request (10) indicating a desired destination (8) for the vehicle (1);
determining (220), by the processing circuitry (102; 402), one or more route suggestions (20) from a current location (6) of the vehicle (1) to the desired destination (8);
employing (230), by the processing circuitry (102; 402), a machine learning model (30) to perform an assessment for each route suggestion (20), each assessment comprising a separation of data into a plurality of transformation process modules (31, 33, 35), wherein:
- a first transformation process module (31) includes map data (32) for said each route suggestion (20),
- a second transformation process module (33) includes cruise controller data (34) of a cruise controller functionality associated with the vehicle (1),
- a third transformation process module (35) includes truck data (36) of the vehicle (1), and
- the machine learning model (30) is configured to process the data (32, 34, 36) of the plurality of transformation process modules (31, 33, 36) through a plurality of neural networks (30-1, 30-2, 30-3, 30-4); and
providing (240), by the processing circuitry (102; 402), one or more route recommendations (40) based on outputs from the machine learning model (30), each route recommendation (40) comprising a cruise controller setting (42) and its expected influence on travelling time of the vehicle (1) in relation to its fuel consumption from the current location (6) to the desired destination (8).

14. A computer program product comprising program code for performing, when executed by the processing circuitry (102; 402), the method (200) of claim 13.

15. A non-transitory computer-readable storage medium comprising instructions, which when executed by the processing circuitry (102; 402), cause the processing circuitry (102; 402) to perform the method (200) of claim 13.
